Europäisches Patentamt

European Patent Office

Office européen des brevets

(19)

(11) Numéro de publication: **0 181 983**
**A1**

(12)

# DEMANDE DE BREVET EUROPEEN

(21) Numéro de dépôt: **84440059.8**

(51) Int. Cl.⁴: **C 05 G 3/04,** C 09 K 17/00

(22) Date de dépôt: **29.11.84**

---

(30) Priorité: **31.10.84 FR 8416779**

(43) Date de publication de la demande: **28.05.86**
**Bulletin 86/22**

(84) Etats contractants désignés: **AT BE CH DE GB IT LI LU NL SE**

(71) Demandeur: **LEON BECK S.A., 2 bis route d'Oberhausbergen, F-67037 Strasbourg (FR)**

(72) Inventeur: **Pekmez, Paul, 4 route d'Oberhausbergen, F-67037 Strasbourg Cedex (FR)**

(74) Mandataire: **Bossard, Jacques-René, CABINET ARBOUSSE BASTIDE 20 rue de Copenhague, F-67000 Strasbourg (FR)**

(54) **Produits gonflants et rétenteurs d'humidité à base de polyacrylamide et de produits fertilisants.**

(57) Nouveaux produits à action gonflante, aérante, rétentrice d'humidité et fertilisante, sur les sols, caractérisés en ce qu'ils consistent en des granulés de polyacrylamide ou de leurs dérivés copolymères simples et réticulés contenant dans leur structure moléculaire de 10 à 50% en poids de composés chimiques possédant des propriétés fertilisantes.

EP 0 181 983 A1

- 1 -

PRODUITS GONFLANTS ET RETENTEURS D'HUMIDITE A BASE DE POLYA-
CRYLAMIDE ET DE PRODUITS FERTILISANTS.

La présente invention concerne de nouveaux moyens pour l'amélioration et la fertilisation des sols.

Les propriétés hydrophiles des polyacrylamides et de leurs dérivés (homopolymères et copolymères avec par exemple l'acide polyacrylique, et copolymères réticulés avec divers autres monomères) sont largement connues, et font l'objet de nombreuses applications.

Parmi ces applications, on peut mentionner les produits consistant dans une forme granulée de ces polymères, qui, mélangés aux sols avec éventuellement des oligoéléments, confèrent à ceux-ci la double propriété de rétention de l'humidité, qu'elle provienne des pluies ou de l'arrosage artificiel, et d'une expansion assurant leur aération.

Ces produits granulés sont commercialisés avec succès sous la marque commerciale "GRAIN D'EAU" par la déposante.

Leur application est cependant limitée à l'amélioration des propriétés physiques des sols, sans modifier leurs propriétés nutritionnelles vis à vis des végétaux, à l'égard desquels ces polymères peuvent être considérés comme neutres.

Ils impliquent donc la nécessité de fertiliser supplémentairement les sols au moyen des composés chimiques classiquement utilisés comme engrais, et adaptés aux diverses cultures envisagées.

La présente invention vise à combler cette lacune.

A cet effet elle concerne une nouvelle catégorie de polyacrylamides (y compris les dérivés évoqués plus haut) possédant la propriété structurale d'être associés à des engrais,
de nature et d'applications spécifiques connues par ailleurs.

Il convient de noter que l'invention ne vise
nullement une simple association par mélangeage des granulés
connus de polyacrylamides avec des engrais, mais bien une
nouvelle structure chimique de ces granulés, créée par l'introduction des proportions voulues des composés chimiques
jouant le rôle d'engrais au cours de la réaction de polymérisation et/ou de réticulation conduisant aux polymères hydrophiles.

L'invention vise donc essentiellement :

- en premier lieu des granulés de polyacrylamide ou de leurs dérivés copolymères simples et réticulés
contenant dans leur structure moléculaire de 10 à 50 % en
poids de composés chimiques possédant des propriétés fertilisantes ;

- en second lieu un procédé pour la fabrication de ces granulés, consistant, dans le processus connu de
fabrication de granulés de polyacrylamides, à introduire au
moment de la réaction de polymérisation et/ou de réticulation,
des composés chimiques connus pour leurs propriétés fertilisantes, à raison de 10 à 50 % en poids.

Parmi les composés chimiques utilisables, on
peut citer à titre d'exemples le phosphate monopotassique, le
nitrate de potasse, le nitrate d'ammonium, le sulfate de magnésium, le sel de fer de l'acide EDDHA et analogues, le choix
de ces composés est déterminé par les cultures à fertiliser ;
toutefois les composés chlorés et les produits oxydants sont
à éviter car ils risqueraient de provoquer une dégradation
prématurée du polymère.

On va donner ci-après quelques exemples de
compositions globales des granulés fertilisants selon l'invention.

- 3 -

Exemple 1 : produit fertilisant pour jardins ornementaux, ce produit exerçant à la fois une action sur le sol et la nutrition des sols, contient, en % en poids :

polyacrylamide de sodium réticulé complément à 100 :

| | |
|---|---|
| phosphate monopotassique | 8,27 |
| nitrate de potassium | 17,59 |
| humidité | 10 |

Exemple 2 : produit fertilisant pour plantes en pots :

polyacrylamide de sodium réticulé complément à 100 :

| | |
|---|---|
| phosphate monopotassique | 2,7 |
| nitrate de potassium | 3,1 |
| nitrate d'ammonium | 5,7 |
| sulfate de magnésium | 0,6 |
| sel de fer de l'acide EDDHA | 0,24 |
| humidité | 10 |

Exemple 3 : produit fertilisant pour jardinière polyacrylamide de sodium réticulé complément à 100 :

| | |
|---|---|
| phosphate monopotassique | 2,3 |
| nitrate de potassium | 2,87 |
| nitrate d'ammonium | 4,53 |
| sel de fer de l'acide EDDHA | 0,28 |
| humidité | 10 |

Il est remarquable que ces produits possèdent de tels effets fertilisants. On considère que ce résultat vient de ce que le milieu est maintenu à un degré d'humidité optimal pendant une durée prolongée, ce qui favorise le relargage progressif des composés fertilisants.

On peut encore améliorer ce résultat grâce à une variante du procédé, qui, selon l'invention, consiste à

0181983

- 4 -

soumettre les granulés, avant utilisation, à une irradiation ménagée par des rayonnements ionisants.

Cette irradiation crée, à la surface et à l'intérieur du polymère, des centres chimiquement actifs qui semblent exercer sur les granulés une action stabilisatrice vis-à-vis de la photodégradation, et une action favorable sur le degré de gonflement des grains, en augmentant le taux de rétention d'eau.

Bien entendu, comme pour tous les produits fertilisants, les granulés fertilisants selon l'invention présenteront une cinétique de relargage variable en fonction de la concentration saline et du pH du milieu auquel ils seront ajoutés.

Il est important de noter que les nouveaux produits selon l'invention ne sont pas de simples mélanges de polyacrylamides connues avec des produits fertilisants connus, mais bien des composés intrinsèquement nouveaux dans la structure cristallisée desquels les éléments polymérisés et les éléments fertilisants sont co-cristallisés et étroitement imbriqués les uns dans les autres.

Cette particularité fondamentale est démontrée par l'étude structurale par microscope électronique à balayage des nouveaux produits selon l'invention ("polymères fertilisés") par comparaison avec les produits connus ("polymères non-fertilisés"). Cette étude est résumée ci-après et illustrée par les quatre figures du dessin annexé :

1) - <u>TECHNIQUE DE PREPARATION POUR LE M.E.B.</u>

. montage et métallisation des échantillons.

Le montage se fait avec une colle conductrice à base d'argent (Dotite D 550) sur des porte-échantillons en cuivre.

La métallisation est réalisée grâce à l'appareil JEOLION SPUTTER JFC 1100. Elle dure trois minutes sous un vide de $10^{-3}$ torr et une tension de 1,2 KV.

- observation en M.E.B.

- 5 -

Le microscope est un JEOL type JSM 35 CF. L'observation des échantillons est faite sous une tension d'accélération de 25 KV.

2) - RESULTATS ET INTERPRETATION

1. Polymère non fertilisé

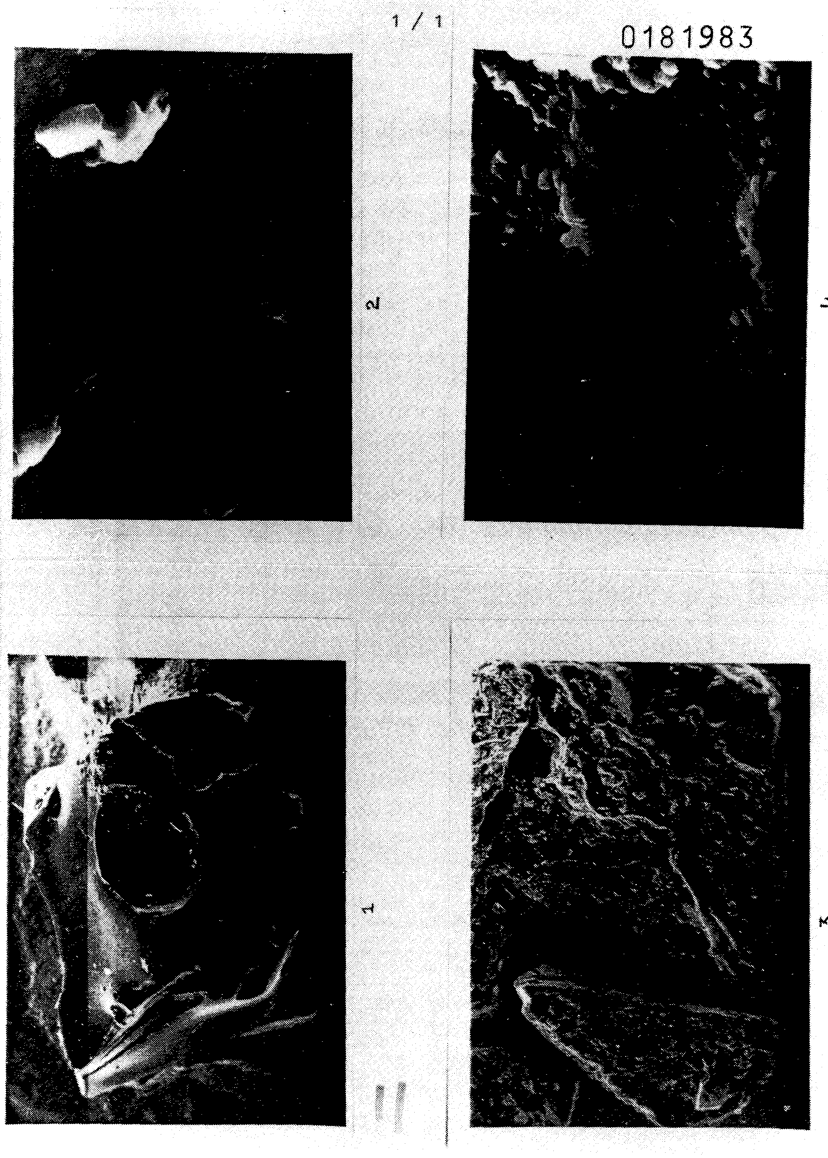

La figure 1 (grandissement X 36) révèle la morphologie d'un fragment de polymère. Les cassures montrent l'existence de "cupules" de diverses tailles dont l'origine peut être attribuée à la formation de bulles d'air au cours de l'élaboration du polymère.

La surface présente également de nombreuses infractuosités à contour irrégulier qui ont pu se former au cours de la deshydratation du produit.

A plus fort grandissement (X 1300 ; figure 2) la surface présente de nombreuses petites dépressions irrégulières dont la taille varie de 1 à 5 um.

2. Polymère fertilisé

A faible grandissement (figure 3, X 36) on remarque que les cassures sont moins nettes et la surface recouverte par des agrégats de cristaux. La structure en cupules observée dans la figure 1 ne se retrouve pas ici ;

la figure 4 met nettement en évidence la structure cristallisée des agrégats et l'imbrication des cristaux dans le polymère.

0181983

- 6 -

REVENDICATIONS.

1. Nouveaux produits à actions gonflante, aérante, rétentrice d'humidité et fertilisante, sur les sols, caractérisés en ce qu'ils consistent en des granulés de polyacrylamide ou de leurs dérivés copolymères simples et réticulés contenant dans leur structure moléculaire de 10 à 50 % en poids de composés chimiques possédant des propriétés fertilisantes.

2. Produits selon la revendication 1, caractérisé en ce qu'ils contiennent comme composés chimiques possédant des propriétés fertilisantes de phosphate monopotassique, du nitrate de potassium, du nitrate d'ammonium, du sulfate de magnésium, et/ou du sel de fer, de l'acide EDDHA, à l'exclusion des composés chlorés et oxydants.

3. Produit selon les revendications 1 et 2, caractérisé par la composition suivante en % en poids :

polyacrylamide de sodium réticulé complément à 100 :

| | |
|---|---|
| phosphate monopotassique | 8,27 |
| nitrate de potassium | 17,59 |
| humidité | 10 |

4. Produit selon les revendications 1 et 2, caractérisé par la composition suivante, en % en poids :

polyacrylamide de sodium réticulé complément à 100 :

| | |
|---|---|
| phosphage monopotassique | 2,7 |
| nitrate de potassium | 3,1 |
| nitrate d'ammonium | 5,7 |
| sulfate de magnesium | 0,6 |
| sel de fer de l'acide EDDHA | 0,24 |
| humidité | 10 |

5. Produit selon les revendications 1 et 2, caractérisé par la composition suivante, en % en poids

polyacrylamide de sodium réticulé complément à 100 :

- 7 -

| phosphate monopotassique | 2,3 |
| nitrate de potassium | 2,87 |
| nitrate d'ammonium | 4,53 |
| sel de fer de l'acide EDDHA | 0,28 |
| humidité | 10. |

6. Procédé pour la préparation des produits selon l'une quelconque des revendications 1 à 5, caractérisé en ce qu'il consiste à incorporer au mélange réactionnel dans le processus de fabrication des granulés de polyacrylamides, au moment de la réaction de polymérisation et/ou de réticulation, des composés chimiques à propriétés fertilisantes à raison de 10 à 50 % en poids.

7. Procédé selon la revendication 6, caractérisé en ce qu'après obtention des granulés, on le soumet à une irradiation ménagée par un rayonnement ionisant.

8. Granulés fertilisants, caractérisés en ce qu'ils résultent de l'application du procédé selon la revendication 7.

1 / 1   0181983

## 0181983

Numero de la demande

### Office européen
### des brevets

# RAPPORT DE RECHERCHE EUROPEENNE

EP 84 44 0059

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | AU-A- 482 198 (UNION CARBIDE) <br> * Pages 34-37; revendications 1,7,23 * | 1,7 | C 05 G 3/04 <br> C 09 K 17/00 |
| | --- | | |
| A | CHEMICAL ABSTRACTS, vol. 74, no. 3, 18 janvier 1971, réf. no. 12259g,Columbus, Ohio, US; N.V. BABENKO: "Effect of synthetic resin additives on the physical and agrochemical properties of mineral fertilizers" & PLAST. MASSY 1970, (10), 54-5 <br> * Résumé * | ·1,2 | |
| | --- | | |
| A | CHEMICAL ABSTRACTS, vol. 69, no. 17, 1968, réf. no. 66547q, Columbus, Ohio, US; N.V. BABENKO: "Physicochemical properties and the effectiveness of various mixed fertilizers" & KHIM. SEL. KHOZ, 1968, 6(4), 257-60 <br> * Résumé * | 1,2 | |
| | --- | | |
| A | US-A-3 336 129 (RICHARD A. HERRETT) <br> * Colonne 4, lignes 36-47; colonnes 5,6; colonne 3, lignes 9-16 * | 1,2,7 | |
| | ----- | | |

| | DOMAINES TECHNIQUES RECHERCHES (Int. Cl.4) |
|---|---|
| | C 05 G 3/04 <br> C 05 G 3/00 <br> C 09 K 17/00 |

Le présent rapport de recherche a été établi pour toutes les revendications

| Lieu de la recherche | Date d'achèvement de la recherche | Examinateur |
|---|---|---|
| LA HAYE | 13-02-1986 | LIBBERECHT-VERBEECK |